# EUROPÄISCHE PATENTSCHRIFT

(11) **EP 0 339 015 B1**
(45) Veröffentlichungstag und Bekanntmachung des Hinweises auf die Patenterteilung: **29.06.1994**
(21) Anmeldenummer: 89890106.1
(22) Anmeldetag: 12.04.1989
(51) Int. Cl.: B66C 19/00, B65G 63/00

(54) **Krananlage mit einbahnigem Fördersystem für den Stückguttransport**
Crane construction with singlelane conveying system for partload transport
Construction de grue avec système de transbordement à voie unique pour le transport de marchandises

(30) Priorität: 18.04.1988 AT 989/88; 03.10.1988 AT 2434/88
(43) Veröffentlichungstag der Anmeldung: 25.10.1989
(73) Patentinhaber: Jonke, Hans, Dr., A-1040 Wien (AT)
(72) Erfinder: Jonke, Hans, Dr., A-1040 Wien (AT)

(56) Entgegenhaltungen:
- EP-A- 0 189 218
- EP-A- 0 281 181
- EP-A- 0 298 147
- DE-C- 332 517
- US-A- 1 525 950

## Beschreibung

Die Erfindung betrifft eine Krananlage gemäß dem Oberbegriff des Patentanspruches 1.

Es sind bereits mehrere Maßnahmen bekannt geworden, kleinere Stückgüter auf Umschlagplätzen mit Lagerhäusern, mehreren Eisenbahngeleisen und/oder LKW-Fahrspuren sowie Kaianlagen wirtschaftlich umzuschlagen. So werden Säcke, Schachteln od.dgl. auf Paletten gestapelt, und diese einzeln oder zu zweit an einem Kranhaken umgesetzt. Der Förderzyklus wird dabei maßgeblich durch die Wegzeit auf der doppelten Förderstrecke beschränkt. Außerdem können aus Sicherheitsgründen keine ungeordneten Güter umgeschlagen werden. Der Einsatz von international genormten Containern ist aufgrund deren Größe nicht überall möglich, erfordert internationale Verwaltungsorganisation, große Stauflächen und hohe Kapitalbindung. Die weiters bekannte Verwendung von Stetigförderern für Säcke und Schachteln erfordert manuellen Einsatz bei den Ein- und Ausgabestellen. Weiters ergeben sich Anpassungsschwierigkeiten des Fördersystems bei veränderlichen Förderhöhen und -weiten bzw. bei Umkehrung der Förderrichtung. Ähnliches gilt für Stetigförderer von Paletten.

In der DE-OS 1 906 212 ist ein Containerkran bekanntgeworden, der Vertikal- und Horizontalförderstrecken für den Stückguttransport besitzt, wobei die Container von einem oder mehreren Senkrecht- auf ein oder mehrere Horizontalfördergeräte umsetzbar sind. Vertikal- und Horizontalförderstrecken sind hiebei kreuzungsfrei aneinander angeschlossen, wodurch klar zum Ausdruck kommt, daß bei diesem System nur eine direkte Übergabe des transportierten Stückgutes vom Vertikal- auf das Horizontalförderzeug stattfinden kann. Die Möglichkeit, leere Container in Ausweichplätzen auf Warteposition abzustellen, fehlt dieser bekannten Ausführung. Zur Steigerung der Umschlagleistung wird in dieser Druckschrift eine doppelbahnige Ausführung vorgeschlagen. Eine solche mehrbahnige Ausführung offenbart auch die DE-OS 1 950 176.

Dieser bekannte Stand der Technik zeigt bei einer angestrebten Steigerung des Stückgutumsatzes aufgrund der parallel ausgeführten Förderstrecken einen entsprechend hohen konstruktiven Aufwand (z.B. je zwei Hubwerke sowohl see- als auch landseitig, sowie zwei Horizontalförderstrecken mit den zugehörigen Horizontalförderzeugen in der DE-OS 1 906 212).

Auch die DE-OS 2 539 968 zeigt eine Krananlage, die über einen größeren Bereich der Horizontalförderstrecke zweibahnig geführt wird. Diese Konstruktion hat den wesentlichen Zweck, als Puffer für mehrere Container zu dienen; eine Steigerung der Umschlagsleistung ist dadurch aber nicht gegeben.

Die Erfindung geht nunmehr von einem Stand der Technik aus, wie er eingangs angegeben wurde und aus der DE-C 332 517 bekannt ist. Dieser Druckschrift ist zu entnehmen, daß mit den Transporthilfen, die gegebenenfalls über eine eigene Gleisanlage in ein zu entladendes Schiff eingebracht werden, ein einbahniger und nur in einer Richtung erfolgender Verkehr auf der Krananlage erfolgt. Wesentlich zur Erhöhung der Förderkapazität von Krananlagen ist es, daß die Transporthilfsmitteln möglichst rasch durch die Fördereinrichtungen wieder zum Ausgangspunkt, das heißt zum Entlade- oder Beladepunkt zurückgebracht werden, was jedoch bei dieser einspurigen bzw. einbahnigen Förderstrecke nicht ohne weiteres möglich ist. Unter dem Begriff Fördereinheiten in dieser Druckschrift werden einerseits die die Wagen in der Vertikalförderstrecke anhebenden Plattformen und andererseits die Antriebswagen zur Verschiebung der Wagen in der Horizontalförderstrecke verstanden.

Zweck und Aufgabe der Erfindung ist es, eine Krananlage der eingangs erwähnten Art zu schaffen, welche bei einfachem Konstruktionsprinzip und voller Transportsicherheit eine wesentliche Anhebung der Umschlagleistung bietet. Es sollen also außer gesicherten Palettenladungen auch ungesicherte Stapel von Schachteln und ungeordnete Fördergüter umgeschlagen werden können.

Die gestellte Aufgabe wird erfindungsgemäß durch die im Kennzeichen des Patentanspruches 1 angeführten Merkmale gelöst.

Um die Transportleistung zu erhöhen, werden somit die Übergabestellen für die Transporthilfen in den Kreuzungspunkten der Vertikal- und Horizontalförderstrecken angeordnet, auf den Vertikalförderstrecken und auf der Horizontalförderstrecke jeweils eigene, d.h. rauf und runter bzw. hin- und herbewegte Fördereinrichtungen vorgesehen und Ausweichplätze für die Transporthilfen (nicht jedoch für die Lastaufnahmemittel) vorgesehen, mit deren Hilfe beladene und/oder unbeladene Transporthilfen im Bereich der Umladestellen aneinander vorbeibewegbar sind. Wesentlich ist somit die Rückführbarkeit der Transporthilfen, womit eine effiziente Transport-leistung bei konstruktiv einfachem Aufbau der Krananlage verwirklicht wird. Unter den erfindungsgemäß vorgesehenen Lastenaufnahmemitteln werden, gemäß diesem in der Krantechnologie üblichen Ausdruck, Fördereinrichtungen verstanden, welche die Transporthilfen anheben und örtlich verlagern, wie z.B. verfahrbare Traghaken, Greifer, Aufzugskabinen, Tragzangen usw.

Vorteilhafte Anwendung finden die erfindungsgemäßen Maßnahmen bei Krananlagen mit zwei Vertikal- und einer Horizontalförderstrecke, wobei zwei Ausweichplätze vorhanden sind und drei Lastaufnahmemittel sowie drei Transporthilfen zum Einsatz kommen. Die Ausweichplätze sind bei einer speziellen Ausführung in beidseitig direkter Verlängerung der Horizontalförderstrecke angeordnet.

Die vorliegende Erfindung ermöglicht eine hohe Verfügbarkeit der Transporthilfen an den Materialein- bzw. -ausgabestellen für die Übergabe bzw. Übernahme der Fördergüter, z.B. mittels allgemein vorhandener Gabelstapler; das heißt, an den Materialein- und -ausgaben treten nur mehr kurze Arbeitsunterbrechungen auf. Trotz einbahniger Ausführung des Fördersystems wird die Rückführung leerer Transporthilfen zu wiederholten Verwendung bei gleichzeitigem Lade- bzw. zeitlich verschobenem Entladevorgang ermöglicht. Zur Gewährleistung der vollen Transportsicherheit werden die Transporthilfen im allgemeinsten Fall als verschließbare Behälter ausgeführt, können aber bei einheitlichem Umschlaggut entsprechend vereinfacht oder mit Klemmvorrichtungen versehen werden.

Das Neue der vorliegenden Erfindung wird insbesondere darin gesehen, daß durch die Einführung von Ausweichplätzen zur Zwischenspeicherung eine zeitliche Verzahnung der vertikalen und horizontalen Arbeitsbewegung erfolgen kann. Diese Eigenschaft führt beispielsweise bei einem Kran mit zwei vertikalen und einer horizontalen Förderstrecke sowie zwei Übergabestellen mit erfindungsgemäßen Ausweichplätzen und drei Lastaufnahmemitteln bzw. Transporthilfen ungefähr zu einer Verdreifachung der Umschlagleistung. Dabei ist von Bedeutung, daß dies für fast gleich gebliebene Gesamtantriebsleistung und Tragkonstruktion der Krananlage gilt. Weiters ist hervorzuheben, daß trotz hoher Umschlagleistung die volle Bedienungs- und Transportsicherheit bei kleinstem Platzbedarf an den Materialein- und Ausgabestellen gegeben ist.

In einer erfindungsgemäßen Ausführung sind die Hubwerke mit einem "Spreader"-artigen Lastaufnahmemittel versehen, soda die Transporthilfen schnell aus- und abgekuppelt werden können. In einer anderen erfindungsgemäßen Ausführung werden die vertikalen Förderstrecken mit Hubtischen realisiert. Die vertikalen Förderstrecken können durch einen festen Aufzugsschacht oder eine teleskopierbare Verkleidung wetterfest umschlossen werden. Aus Wettergründen ist es auch sinnvoll, den Horizontaltransport geschützt im Brückenträger des Krans unterzubringen. Die Antriebe für die Horizontalförderung, die Ausweichplätze und Übergabestellen können prinzipiell in jeder von der Schwerlastfördertechnik bekannten Form ausgeführt werden.

Auch sind bereits mehrere aufwendige Maßnahmen bekannt, um Stetigförderer einem (unabhängig voneinander) sich veränderlichen Niveau der Ein- und Ausgabestellen anzupassen. So ist es bei Vertikalförderstrecken nach dem Paternoster- bzw. Spiralfördersystem erforderlich, den oberen Aufhängepunkt derselben in gleichem Maße durch Anheben oder Neigen der nachfolgenden Horizontalförderstrecke zu verändern.

Es ist daher ein weiteres Ziel der Erfindung, eine Krananlage der eingangs erwähnten Art zu schaffen, welche bei einfachem Konstruktionsprinzip das Be- und Entladen auf beliebigem Niveau unter Beachtung der vollen Arbeitssicherheit erlaubt.

Diese Aufgabe wird erfindungsgemäß dadurch gelöst, daß die von (teleskopierbaren) Förderschächten umschlossenen Vertikalförderstrecken an ihren unteren Enden Ladestationen angeordnet haben und sich längs der Horizontalförderstrecke mehrere Lastaufnahmemittel befinden und daß als Tragkonstruktion insbesondere Portal, Halbportal, Brücken- und Wippdrehkrane mit starrem bzw. in horizontaler Richtung verschiebbarem, bzw. klappbarem Kranausleger vorgesehen sind.

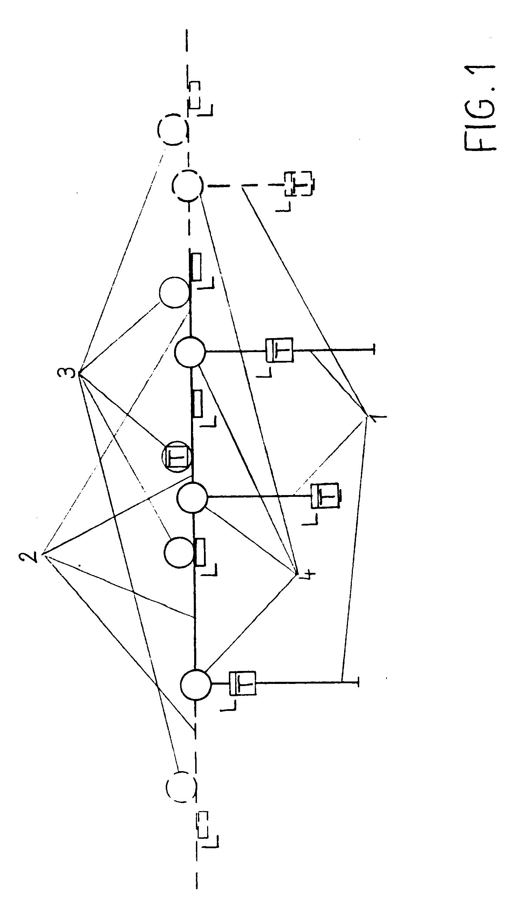

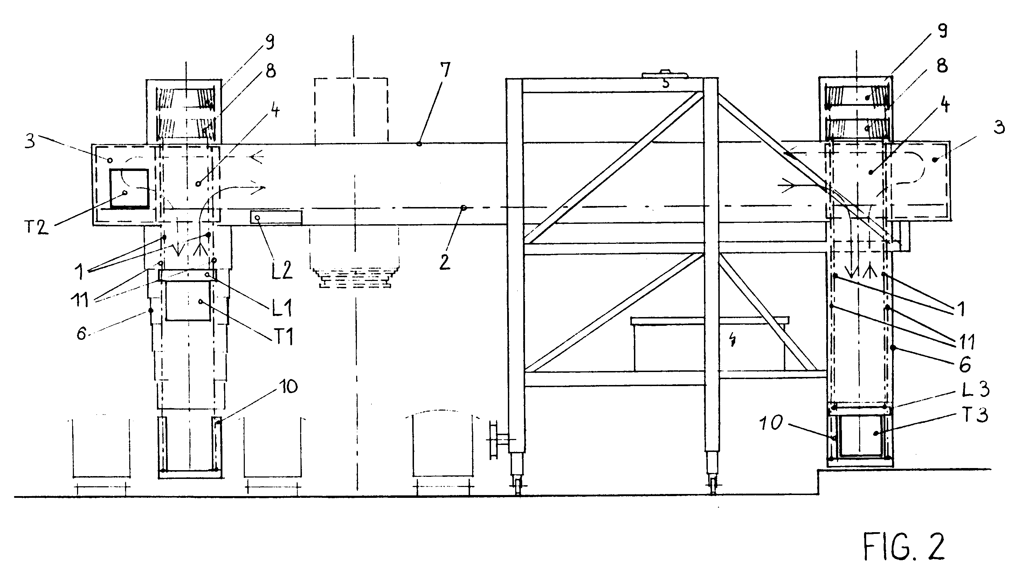

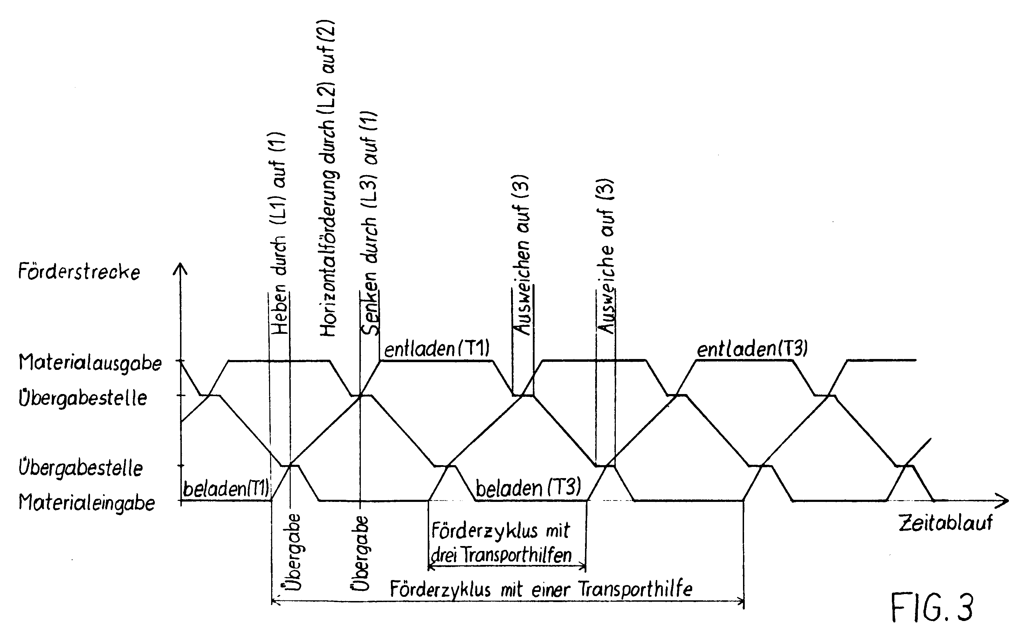

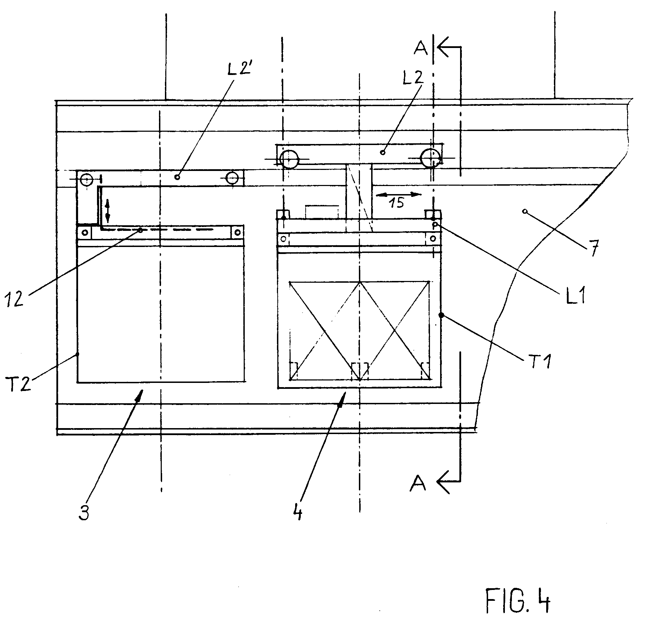

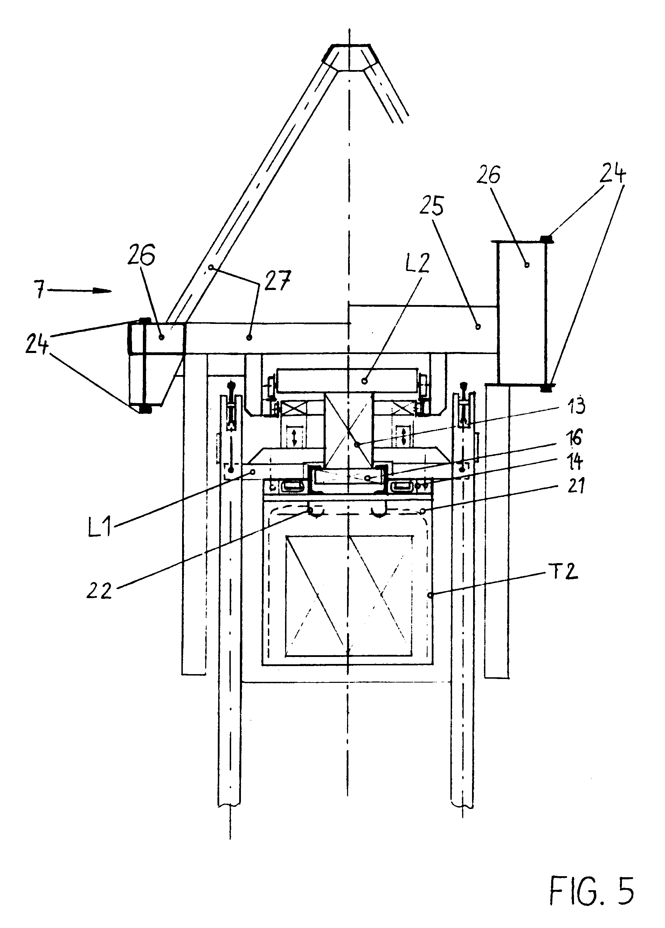

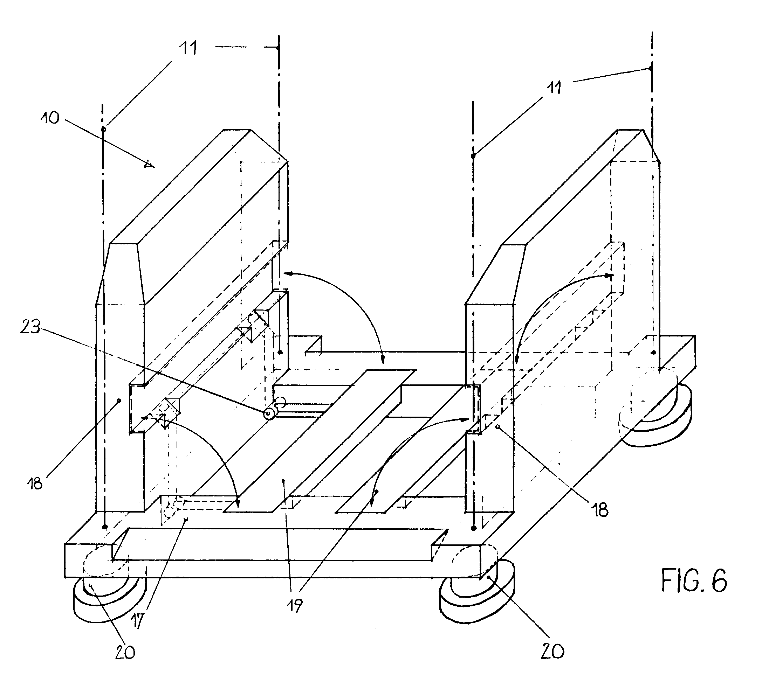

Einzelheiten der Erfindung und vorteilhafte Ausführungsformen werden im Fo]genden an Hand von schematischen Zeichnungen eines Ausführungsbeispieles näher erläutert. Es zeigen: die Figur 1 ein erfindungsgemäßes Fördersystem in schematischer Darstellung; die Figur 2 als Ausführungsbeispiel eine Krananlage im Aufriß; die Figur 3 einen zu Figur 2 gehörenden Zeitablaufplan; die Figur 4 eine Übergabestelle mit Ausweichplatz in seitlicher Ansicht; die Figur 5 den Schnitt A-A nach Fig.4; und die Figur 6 eine axonometrische Darstellung einer Ladestation mit Seilschachtführung. Die Bewegungen auf dem einbahnigen Förderweg mit seinen Vertikal-1 und Horizontalförderstrecken 2 sind zeitlich so gegeneinander verschoben, daß sich gegenläufige Transporthilfen T an den Ausweichplätzen 3 begegnen bzw. dort zwischengespeichert werden. So wird in Figur 2 die Transporthilfe T1 durch das Lastaufnahmemittel L1 nach oben befördert und nach Erreichen der Übergabestelle 4 sofort dem Lastaufnahmemittel L2 zur Horizontalförderung übergeben. Bei einem Entladevorgang ist aber bereits kurz vor dem abgeschlossenen Hubvorgang der vollen Transporthilfe T1 die leere Transporthilfe T2 von der Materialausgabe her über die Horizontalförderstrecke 2 und die Übergabestellen 4 auf den Ausweichplatz 3 eingelangt und wird nun nach dem Passieren von T1 wieder in die Übergabestelle 4 gebracht und dort vom Lastaufnahmemittel L1 zum Absenken übernommen. Am anderen Ende der in ihrer Länge veränderbaren Horizontalförderstrecke 2 läuft dieser Vorgang analog ab, sodaß sich für die drei Transporthilfen T1,T2,T3 der Zeitablauf nach Figur 3 ergibt.

Weiters sind an den Vertikalförderstrecken 1 für die Be-und Entladung des Fördersystems Ladestationen 1 vorgesehen (Fig.2). Die einzelnen Transporthilfen T werden mittels eines Seilhubwerkes 8 am entsprechenden Lastaufnahmemittel L1, L3 in die Ladestation 10 abgesenkt. Seile 11 sind an den Ladestationen befestigt und werden durch Windwerke 9 so gespannt, daß sie einen Seilschacht für die Lastaufnahmemittel L1, L3 bilden. Die Seile 11 laufen dabei durch Führungsösen an den Lastaufnahmemitteln L1 und L3. An die Ladestation 10 schließen nach oben (teleskopierbare) Förderschächte 6 an, welche die Vertikalförderstrecke 1 ganz oder teilweise umschließen.

Verschiedene Ausstattungsvarianten für die Ladestation 10 sind denkbar, wie beispielsweise Zähl- und Wiegeeinrichtung für die Transporthilfen T, automatisch öffnende Türen an den Ladestationen 10 mit Sicherheitslichtschranken, oder Steuertableaus für einen Eingriff in den sonst automatischen Steuerungsablauf des Fördersystems. Bei Verwendung von Containern mit Rolltoren als Transporthilfe T, können Ladestation 10 und Container so ausgeführt werden, daß beim Einfahren des Containers in die Ladestation 10 die Tore automatisch in die Decke des Containers geschoben werden. In einer Variante der Ladestation befindet sich in dieser eine Ausgabevorrichtung (z.B. Wagen auf Teleskopschienen), auf welcher die Transporthilfen T abgesetzt und seitlich ausgefahren werden können. Dies ermöglicht z.B. die Übergabe der Transporthilfen T in verschiedenen Stockwerken eines Lagerhauses.

Vorteilhafte Anwendung haben die erfindungsgemäßen Maßnahmen insbesondere bei Krananlagen für die Schiffsentladung, da sich eine vom Schacht getrennte Ladestation 10 mit ausfahrbaren Standbeinen 20 den verschiedenen Niveaus und Neigungen eines Schiffbodens anpassen kann (Fig.6). Weiters ist es möglich, den unteren Rand des getrennten Teleskopschachtes mit einer in Größe und Lage verstellbaren Wetterabdeckung zu versehen (um Z.B. Schiffsluken gegen Witterungseinflüsse abzudecken).

Für eine lückenlose übergabe der einzelnen Transporthilfen T in den Übergabestellen 4 sind auf der Horizontalförderstrecke 2 mehrere Lastaufnahmemittel L2, L2′ vorgesehen. Diese Lastaufnahmemittel auf der Horizontalförderstrecke 2 sind so ausgebildet, daß sie die Transporthilfen T in den Übergabestellen 4 übergeben bzw. übernehmen können. So besitzt das Lastaufnahmemittel L2′ gabelförmige, heb- und senkbare Aufnahmeträger 12, die bei der Übernahme der Transporthilfe T in das Lastaufnahmemittel L2 seitlich einfahren können. Die Figur 2 zeigt jenen Zustand, wo eine leere Transporthilfe T2 vom Lastaufnahmemittel L2′ bereits übernommen und auf den Ausweichplatz 3 gebracht wurde. Nun kann eine beladene Transporthilfe T1 vom zu entladenden Schiff oder Bahnwaggon gehoben und auf der Horizontalförderstrecke 2 an Land gebracht werden. Währenddessen kann auch die leere Transporthilfe T2 vom Lastaufnahmemittel L2′ an die Übergabestelle 4 gebracht werden und vom Lastaufnahmemittel L1 übernommen, sowie auf das Schiff bzw. den Waggon abgesenkt werden. Beim Absenken wird, wie schon zuvor beschrieben das Lastaufnahmemittel L1 durch den an der Ladestation 10 aufgespannten Seilschacht geführt.

Die Ladestation 10 besitzt in einen Rahmen 17 eingesetzte Achsen 23 zum Tragen abklappbarer Stege 19, um ein Befahren der Ladestation mit einem Hubstapler zu ermöglichen. Bei in die Seitenwände 18 hochgeklappten Stegen 19 kann das Lastaufnahmemittel L1 bzw. L3 bis auf den Rahmen 17 der Ladestation 10 hinunter abgesenkt werden.

Sowohl das Seilhubwerk 8 der Vertikalförderstrecke 1, als auch das Windwerk 9 für den Seilschacht sind zur Durchführung von Einstellbewegungen unabhängig voneinander in und quer zur Kranauslegerrichtung verschiebbar angeordnet.

Abweichungen der Vertikal- 1 und Horizontalförderstrecken 2 von der exakt Lot- bzw. Waagrechten verlassen nicht den Erfindungsgedanken zur Steigerung der Umschlagleistung eines unstetigen Fördersystems. Das erfindungsgemäße Fördersystem wurde der Übersichtlichkeit halber in dem gezeigten Ausführungsbeispiel an einem Portalkran mit in horizontaler Richtung verschiebbarem Kran-Ausleger für die Waggonentladung demonstriert.

Weiters können im Rahmen einer erfindungsgemäßen Ausführung mit für den Betreiber unstetig arbeitendem Gesamtsystem, die Transporthilfen teilweise durch stetig umlaufende Antriebe befördert werden bzw. gegenkläufige Transporthilfen sich auf den sonst einbahnig ausgeführten Förderwegen in zweibahnig angelegten Ausweichplätzen treffen.

## Patentansprüche

1. Krananlage mit einem unstetig arbeitenden Fördersystem für den Transport von Stückgut, insbesondere von Säcken, Schachteln, palletierten Gütern odgl., im wesentlichen umfassend
- eine Tragkonstruktion
- eine oder mehrere Vertikalförderstrecken (1)
- zumindest eine Horizontalförderstrecke (2)
- verfahrbare Transporthilfen (T) für das Stückgut
- Ausweichplätze (3) für die verfahrbaren Transporthilfen (T),
- eigene Fördereinrichtungen zur Beförderung der Transporthilfen (T) in der(n) Vertikalförderstrecke(n) (1) und
- eigene Fördereinrichtungen zur Beförderung der Transporthilfen (T) in der(n) Horizontalförderstrecke(n) (2),
dadurch gekennzeichnet,
daß in dem längs des gesamten Förderweges einbahnig ausgeführten und in beide Richtungen gleichzeitig Transporthilfen (T) befördernden Fördersystem, die als Lastaufnahmemittel (L2) ausgebildete Fördereinrichtung der Horizontalförderstrecke (2) eine hin-und hergehende Bewegung zwischen den Vertikalförderstrecken (1) ausführt und dabei die einzelnen Transporthilfen (T) in abwechselnder Richtung befördert.
daß der Kreuzungsbereich der jeweiligen Vertikalförderstrecke (1) mit der Horizontalförderstrecke (2) als Übergabestelle (4) zur Übergabe der von den Fördereinrichtungen der jeweiligen Vertikalförderstrecke (1) angelieferten Transporthilfen (T) an das jeweilige Lastaufnahmemittel (L) der Horizontalförderstrecke(n) (2) und umgekehrt vorgesehen bzw. ausgebildet ist,
daß die Ausweichplätze (3) zur Aufnahme von jeweils einer Transporthilfe (T) ausgebildet sind und an den Bereich der Kreuzungen von Vertikal- und Horizontalförderstrecken (1,2) bzw. Übergabestellen (4) anschließen,
daß in diesen Ausweichplätzen (3) eine (T2) von den beiden aneinander vorbeizubewegenden Transporthilfen (T1,T2) zwischenlagerbar ist, um die Übergabe der anderen Transporthilfe (T1) von der Fördereinrichtung der Vertikalförderstrecke (1) an das Lastaufnahmemittel (L2) der Horizontalförderstrecke (2) bzw. umgekehrt zu ermöglichen und
daß die Transporthilfen (T) des einbahnigen Fördersystems von den Be-und Entladestellen aus auf der gleichen Bahn zurückgeführt werden.

2. Krananlage nach Anspruch 1, dadurch gekennzeichnet, daß eine oder mehrere Horizontalförderstrecken (2) zwischen den Übergabestellen (4) in ihrer Länge veränderbar sind.

3. Krananlage nach Anspruch 1 oder 2, dadurch gekennzeichnet, daß der gesamte Förderweg aus zwei Vertikal- (1) und einer Horizontalförderstrecke (2) mit zwei Ausweichplätzen (3) und zwei Übergabestellen (4) besteht, wobei drei Lastaufnahmemittel (L1,L2,L3) und drei Transporthilfen (T1,T2,T3) eingesetzt werden.

4. Krananlage nach Anspruch 3, dadurch gekennzeichnet, daß sich die beiden Ausweichplätze (3) in beidseitig direkter Verlängerung der Horizontalförderstrecke (2) befinden.

5. Krananlage nach Anspruch 3, dadurch gekennzeichnet, daß für die Aufnahme des Transportgutes durch die Lastaufnahmemittel (L1,L 2,L3) Transporthilfen (T1,T2,T3) vorgesehen sind, die aus geschlossenen oder offenen Behältern, Körben, Rahmen, Zangen od.dgl. mit oder ohne Klemmvorrichtung bestehen.

6. Krananlage nach Anspruch 5, dadurch gekennzeichnet, daß die Antriebskräfte für die horizontalen Bewegungen der Transporthilfen (T1,T2,T3) auf der Horizontalförderstrecke (2) durch Rollbahnen, Förderbänder, Förderschlitten, Ketten, Seile oder mittels Eigenantrieb der Transporthilfen (T1,T2,T3) aufgebracht werden.

7. Krananlage nach den Ansprüchen 1 und 3, dadurch gekennzeichnet, daß die Vertikalförderstrecken (1) als Seilhubwerke, Scherenhubtische, selbstkletternde Plattformen od.dgl. ausgebildet sind.

8. Krananlage nach Anspruch 1, dadurch gekennzeichnet, daß die Vertikalförderstrecken (1) durch feste oder teleskopierbare Förderschächte (6) umschlossen sind.

9. Krananlage nach den Ansprüchen 1 und 3, dadurch gekennzeichnet, daß die Horizontalförderstrecke (2) sich im Inneren des schachtförmigen Kranauslegers (7) befindet.

10. Krananlage nach einem der vorhergehenden Ansprüche, dadurch gekennzeichnet, daß die von (teleskopierbaren) Förderschächten (6) umschlossenen Vertikalförderstrecken (1) an ihren unteren Enden Ladestationen (10) angeordnet haben und sich längs der Horizontalförderstrecke (2) mehrere Lastaufnahmemitteln (L2,L2') befinden und daß als Tragkonstruktion insbesondere Portal-, Halbportal-, Brücken- und Wippdrehkrane mit starrem bzw. in horizontaler Richtung verschiebbarem bzw. klappbarem Kran-Ausleger (7) vorgesehen sind.

11. Krananlage nach Anspruch 10, dadurch gekennzeichnet, daß in den Übergabestellen (4) weitere Lastaufnahmemittel (L2') auf der Horizontalförderstrecke (2) zum Einsatz kommen, welche gabelförmige, heb- bzw. senkbare Aufnahmeträger (12) für die Transporthilfen (T1,T2,T3) aufweisen.

12. Krananlage nach den Ansprüchen 10 und 11, dadurch gekennzeichnet, daß die Transporthilfe (T2) auf der Horizontalförderstrecke (2) durch eine vom Lastaufnahmemittel (L2) abgehängte (13), die Transporthilfe (T2) in ihrem Oberteil (14) hammerkopfartig untergreifende und von beiden Transportrichtungen (15) einführbare Tragplatte (16) aufgenommen wird.

13. Krananlage nach einem der vorhergehenden Ansprüche, dadurch gekennzeichnet, daß das Seilhubwerk (8) der Vertikalförderstrecke (1) im Brückenträger bzw. Kranausleger (7) ortsfest bzw. gegebenenfalls in Kranauslegerrichtung und/oder quer dazu verschiebbar angebracht ist.

14. Krananlage nach einem der Ansprüche 10 bis 13, dadurch gekennzeichnet, daß der (teleskopierbare) Förderschacht (6) in seinem unteren Teil als Ladestation (10) mit Einrichtungen wie Sicherheitslichtschranken, Zähl- und Wiegeeinrichtung, automatischen Türen, Steuertableaus und dgl. ausgebildet ist, wobei mittels gespannter Seile (11) zwischen Windwerk (9) und Ladestation (10) eine Seilschachtführung für die Lastaufnahmemittel (L1,L3) der Vertikalförderstrecken (1) gebildet wird.

15. Krananlage nach einem der Ansprüche 11 bis 13, dadurch gekennzeichnet, daß die über eine Seilschachtführung abgehängte Ladestation (10) unabhängig vom teleskopierbaren Förderschacht (6) aus einem am Boden (z.B. Schiffsboden) abgesetzten Rahmen (17) mit Seitenwänden (18) gebildet ist, an dem die Seile (11) für die Seilschachtführung angebracht sind, wobei aus den Seitenwänden (18) abklappbare Stege (19) ein Befahren der Ladestation (10) mit Hubstaplern ermöglichen bzw. bei hochgeklappten Stegen (19) die Lastaufnahmemittel (L1,L3) bis auf Bodenniveau der Beladestation (10) abgesenkt werden können.

16. Krananlage nach Anspruch 15, dadurch gekennzeichnet, daß der Rahmen (17) der Ladestation (10) eine (hydraulische) Ausgleichseinrichtung in Form ausfahrbarer Standbeine (20) besitzt.

17. Krananlage nach einem der vorhergehenden Ansprüche, dadurch gekennzeichnet, daß die Transporthilfen (T1,T2,T3) aus Containern (21) bestehen, deren gegenüberliegende Tore beim Einfahren in die Ladestation (10) automatisch in die Decke des Containers (21) eingeschoben werden.

18. Krananlage nach einem der vorhergehenden Ansprüche, dadurch gekennzeichnet, daß am Oberteil (14) der Transporthilfen (T1,T2,T3) Lasthaken (22) vorgesehen sind.

19. Krananlage nach Anspruch 10, dadurch gekennzeichnet, daß der verschiebbare Kranausleger (7) durch ein Dreigurt-Fachwerk (27) gebildet wird und die den Kranausleger (7) führenden Schienen auf dem verbreiterten, waagrechten Untergurt angebracht sind, sodaß sich die Horizontalförderstrecke (2) unterhalb der tragenden Konstruktion des Kranauslegers (7) befindet.

20. Krananlage nach Anspruch 10, dadurch gekennzeichnet, daß der verschiebbare Kranausleger (7) durch zwei torsionssteife Kastenträger (26) mit dazwischenliegendem, horizontalem Fachverband (25) gebildet wird und die den Kranausleger (7) führenden Schienen (24) auf den Außenstegen der Kastenträger angebracht sind, sodaß sich die Horizontalförderstrecke (2) unterhalb der tragenden Konstruktion des Kranauslegers (7) befindet.

## Claims

1. Crane system having a discontinuously working conveying system for the transshipment of cargo, of in particular bags, boxes, palletted goods or the like, essentially comprising
- a supporting structure
- one or a plurality of vertical conveying lines (1)
- at least one horizontal conveying line (2)
- transportable transport-carriers (T) for cargo
- turn-outs (3) for the conveyable transport-carriers (T)
- independent conveying means for conveying the transport-carriers (T) along the vertical conveying line(s) (1) and
- independent conveying means for conveying the transport-carriers (T) along the horizontal conveying line(s) (2)
**characterized in**
**that** the conveying means of the horizontal conveying line (2) - as part of a conveying system with a single lane conveying path over its entire length, conveying transport-carriers (T) in both directions at the same time - is configurated as load receiving means (L2) moving to and fro between said vertical conveying lines (1), and thereby conveying the singly transport-carriers (T) one by one in reciprocal directions;
**that** the intersection area of each vertical conveying line (1) with the horizontal conveying line (2) is provided resp. formed as transfer-area (4) for the transfer of the transport-carriers (T) delivered by each vertical conveying line (1) to the actual load receiving means (L) on the horizontal conveying line(s) (2) and inverse;
**that** the turn-outs (3) are formed for storing of one transport-carrier (T) only and are connected to the intersection area of said vertical and horizontal conveying lines (1,2) resp. transfer areas (4);
**that** one (T2) of the said transport-carriers (T1,T2) which have to pass by each other, can be stored intermediately in this turn-outs (3), for enabling the transfer of the other transport-carrier (T1) from the conveying means of the vertical conveying line (1) to the load receiving means (L2) of the horizontal conveying line (2) resp. vice versa;
**that** the transport-carriers (T) of this single lane conveying system are brought back from the loading and unloading areas to the the same lane.

2. Crane system according to claim 1, characterized in that one or a plurality of the horizontal conveying lines (2) between said transfer areas (4) are changeable in length.

3. Crane system according to claim 1 or 2, characterized in that the entire conveying path consists of two vertical-(1) and one horizontal conveying line (2) with two turn-outs (3) and two transfer areas (4) and three load receiving means (L1,L2,L3) and three transport carriers (T1,T2,T3) are used.

4. Crane system according to claim 3, characterized in that the two turn-outs (3) are disposed on both sides in direct extension of the horizontal conveying line (2).

5. Crane system according to claim 3, characterized in that the transport carriers (T1,T2,T3) consisting of closed or open containers, baskets, frames, tongs or the like with or without clamping means, provided for taking up the conveyed cargo by the load receiving means (L1,L2,L3).

6. Crane system according to claim 5, characterized in that the driving power for the horizontal movement of the transport carriers (T1,T2,T3) on the horizontal conveying line (2) is provided by moving runways, conveying belts, conveying sleds, chains, ropes, or by means of automotive drive of the transport carriers (T1,T2,T3).

7. Crane system according to claims 1 and 3, characterized in that the vertical conveying lines (1) are formed as cable hoistinggears, scissor-type jack tables, self-climbing platforms or the like.

8. Crane system according to claim 1, characterized in that the vertical conveying lines (1) are enclosed by stationary or telescopic hoisting shafts (6).

9. Crane system according to claims 1 and 3, characterized in that the horizontal conveying line (2) is disposed in the interior of the shaft-shaped crane boom (7).

10. Crane system according to any one of the preceding claims, characterized in that loading stations (10) are provided on the lower ends of the vertical conveying lines (1) which are enclosed by (telescopic) conveying shafts (6) and a plurality of load-receiving means (L2,L2') is disposed along the horizontal conveying line (2), and that the supporting structure is provided in the form of in particular portal cranes, semiportal cranes, bridge cranes and dericking jib cranes provided with a rigid or horizontally displaceable or privotal boom (7).

11. Crane system according to claim 10, characterized in that further load receiving means (L2') are used in the transfer areas (4) on the horizontal conveying line (2), said further load receiving means being provided with fork-shaped, hoistable and descendable receiving-supports (12) for the transport carriers (T1,T2,T3).

12. Crane system according to claims 10 and 11, characterized in that the transport carriers (T2) on the horizontal conveying line (2) are received by a hammerhead-like supporting plate (16) depending (13) from the load-receiving means (L2), prehensile the transport carrier (T2) in its upper portion (14) and being insertable from both directions of transport (15).

13. Crane system according to any one of the preceding claims, characterized in that the cable hoisting gear (8) of the vertical conveying line (1) is disposed fixedly resp. displaceably in crane boom direction and/or transversely thereto in the bridge girder or crane boom.

14. Crane system according to any one of the claims 10 to 13, characterized in that the (telescopic) conveying shaft (6) is formed in its lower part as loading station (10) with means such as safety photoelectric barriers, counting and weighing means, automatic doors, control panels and the like; whereby a cable-shaft-guiding-means being formed by the cables (11) tensioned between winding gear (9) and loading station (10) for the load receiving means (L1,L3) of the vertical conveying line (1).

15. Crane system according to any one of the claims 11 to 13, characterized in that the loading station (10) suspended from a cable-shaft-guiding-means is formed independently of the telescopic conveying shaft (6) by a frame (17) placed on a bottom (for instance a ship's hold) with lateral walls (18), the cables (11) for the cable shaft guiding means being tied on to said frame, whereby gangboards (19) folded down from the lateral walls (18) permits driving into the loading station (10) with stacker trucks, while the gangboards (19) folded upwards permit the load receiving means (L1,L3) to be lowered to the bottom level of the loading station (10).

16. Crane system according to claim 15, characterized in that the frame (17) of the loading station (10) is provided with (hydraulic) compensating means in the form of telescopic supporting legs (20).

17. The crane system according to any one of the preceding claims, characterized in that the transport carriers (T1,T2,T3) consist of containers (21) whose opposing doors are automatically inserted into the ceiling of the container (21) on entering the loading station (10).

18. The crane system according to any one of the preceding claims, characterized in that load hooks (22) are provided on the upper part (14) of the transport carriers (T1,T2,T3).

19. Crane system according to claim 10, characterized in that the displaceable crane boom (7) is formed by a triangular truss (27) and the rails guiding the crane boom (7) are disposed on the widened horizontal bottom boom member, so that the horizontal conveying line (2) is positioned underneath the load-bearing structure of the crane boom.

20. Crane system according to claim 10, characterized in that the displaceable crane boom (7) is formed by two torsion-proof box girders (26) with a horizontal checker work (25) disposed there between and the rails (24) guiding the crane boom (7) are disposed on the outer gangboards of the box girders so that the horizontal conveying line (2) is positioned underneath the load-bearing structure of the crane boom (7).

## Revendications

1. Installation de grue avec système de transbordement à action continue pour le transport de marchandises en ballots, à savoir de sacs, boîtes, et marchendises palletées et c., comprenant en pricipe:
- une construction de support
- une ou plusieures voies de transbordement verticales (1)
- au moins une voie de transbordement horizontale (2)
- des auxiliaires de transport déplaçables (T) pour les marchandises en ballots
- des voies de garage (3) déstinées aux auxiliaires de transport déplaçables (T),
- plusieurs dispositifs de transbordement déstinés au transport des auxiliaires de transport (T) sur la (les) voie(s) de transbordement verticales (1) et
- plusieures installations de transbordement déstinées au transport des auxiliaires de transport (T) sur la (les) voie(s) de transbordement horizontale(s) (2),
caracérisée par le fait que
dans le système de transbordement à sens unique, tout au long de la voie de transbordement complète, des auxiliaires de transport (T) sont transportés simultanément dans les deux sens et que l'installation de transbordement, construite comme porte-charge (L2) de la voie de transbordement horizontale (2), foncionne à va-et-vient entre les voies de transbordement verticales (1), tout en transportant en sens alternatif les différents auxiliaires de transport (T).
le point d'intersection de la voie de transbordement verticale (1) en question avec la voie de transbordement horizontale (2) est prévu ou construit comme poste de transfert (4) déstiné à la transmission des auxiliaires de transport (T) transmis sur les installations de transbordement de la voie de transbordement verticale en question (1) au porte-charge (L) donné des voie(s) de transbordement horizontale(s) (2) et vice-versa,
les voies de garage (3) sont chacun déstiné à reçevoir un auxiliare de transport (T) afin de les relier à l'endroit des intersections des voies de transbordement verticales et horizontales (1,2) repectivement des postes de transfert (4),
sur ces voies de garage (3) un (T2) des deux auxiliaires de transport, déstinés à passer l'un l'autre (T1, T2), est entreposable afin de permettre le passage de l'autre auxiliaire de transport (T1) de l'installation de transbordement de la voie de transbordement verticale (1) au porte-charge (L2) de la voie de transbordement horizontale (2) respectivement en sens inverse et
que les auxiliaires de transport (T) du système de transbordement à sens unique sont reconduits sur la même voie partant des postes de chargement et de déchargement.

2. Installation de grue selon revendication 1, caractérisée d'une longueur variable d'une ou plusieures voies de transbordement horizontales (2) entre les postes de transfert (4).

3. Installation de grue selon revendication 1 ou 2, caractérisée par le fait que la voie de transbordement complète comprend deux voies de transbordement verticales (1) et une voie de transbordement horizontale (2), présentant deux voies de garage (3) et deux postes de transfert (4) tout en se servant de trois porte-charge (L1, L2, L3) et de trois auxiliaires de transport (T1, T2, T3).

4. Installation de grue selon revendication 3, caracérisée par le fait que les deux voies de garage (3) se trouvent des deux côtés de la voie de transbordement horizontale (2) en prolongement direct.

5. Installation de grue selon revendication 3, caractérisée par l'existence des auxiliaires de transport (T1, T2, T3) déstinés à la prise des biens à transporter par les porte-charge ((L1, L2, L3), ces auxiliaires de transport étant des récipients ouverts ou fermés, des corbeilles, des cadres, des pinces et c. pouvant être munis d'un dispositif de serrage.

6. Installation de grue selon revendication 5, caractérisée par le fait que les forces motrices pour les mouvements horizontaux des auxiliaires de transport (T1, T2, T3) sur la voie de transbordement horizontale (2) sont crées par des convoyeurs à rouleaux, des bandes de transbordement, des glissoirs, des chaînes, des câbles ou par entraînement propre des auxiliaires de transport (T1, T2, T3).

7. Installation de grue selon revendication 1 et 3, caractérisée par le fait que les voies de transbordement verticales (1) sont construites comme des treuils à câbles, des plate-formes mobiles à ciseaux, des plate-formes automouvantes et c.

8. Installation de grue selon revendication 1, caractérisée par le fait que les voies de transbordement verticales (1) sont entourées par des puits de service (6) fixes ou étirables.

9. Installation de grue selon revendication 1 et 3, caractérisée par le fait que la voie de transbordement horizontale (2) se trouve à l'intérieur de la flèche de grue (7) en forme de puits.

10. Installation de grue selon une des revendications antérieures, caractérisée par le fait que les voies de transbordement verticales (1), entourées par les puits de service (étirables) (6), sont munies de postes de chargement (10) à ses extrémités inférieures et que plusieurs porte-charge (L2, L2') se trouvent tout au long de la voie de transbordement horizontale (2) et que la construction de support se présente sous forme de grues portiques, de grues à semi-portique, de ponts-grues et de grues à volée dont la flèche de grue (7) sera fixe, horizontalement décalable ou à bascule.

11. Installation de grue selon revendication 10, caracérisée par le fait qu'elle se sert dans les postes de transfert (4) d'autres porte-charge (L2') sur la voie de transbordement horizonale (2), munis de porte-chargement (12) à fourche, verticalement déplaçables pour les auxiliaires de transport (T1, T2, T3).

12. Installation de grue selon les revendications 10 et 11, caractérisée par le fait que l' auxiliaire de transport (T2) sur la voie de transbordement horizontale (2) peut être reçue par une plate-forme porteuse (16), détachée (13) du porte-charge (L2). Cette plate-forme embrasse, montant du bas, en forme de tête de marteau la partie supérieure (14) de l'auxiliaire de transport (T2) et peut être insérée des deux directions de transport (16).

13. Installation de grue selon une des revendications pré-citées, caracértisée par le fait que le treuil à câble (8) de la voie verticale de transbordement (1) est fixé de manière rigide dans le porte-pont respectivement dans la flèche de grue (7) ou respectivement dans le sens de la flèche de grue et/ou transversalement déplaçable.

14. Installation de grue selon une des revendications 10 à 13, caractérisée par le fait que le puits de service (6) étirable porte des équipements telles que barrières lumineuses de sécurité, dispositif-compteur, bascule, portes automatiques, tableaux de commande, de façon que des câbles tendus (11) entre le treuil de halage (9) et le poste de chargement ((10) forment un guidage de puits de câble pour les porte-charge (L1, L3) des voies de transbordement verticales (1).

15. Installation de grue selon une des revendications 11 à 13, caractérisée par le fait que le poste de chargement (10), pendu sur un treuil de halage, comprend, indépendamment du puits de transport (6) étirable, un cadre (17) reposant sur le sol (fond de cale) et des parois latérales (18), portant les câbles (11) pour le guidage du treuil de halage, les parois latérales (18) étant munies de voies repliables (19), permettant l'usage du poste de chargement (10) par chariots élévateurs respectivement les entretoises pliées vers le haut (19) peuvent être baissées jusqu'au niveau du sol du poste de chargement (10).

16. Installation de grue selon revendication 15, caractérisée par le fait que le cadre (17) du poste de chargement (10) est muni d'un dispositif compensateur (hydraulique) sous forme de jambes de soutien (20) débrochables.

17. Installation de grue selon une des revendications pré-citées, caractérisée par le fait que les auxiliaires de transport (T1, T2, T3) sont des containers (21), dont les portes opposantes sont insérées automatiquement dans le plafond du container (21) lors du chargement du poste de chargement (10).

18. Installation de grue selon une des revendications pré-citées, caractérisée par le fait que des crochets porte-charge (22) sont prévus dans la partie supérieure (14) des auxiliaires de transport (T1, T2, T3).

19. Installation de transport selon revendication 10, caractérisée par le fait que la flèche de grue (7) comprend un treillis à trois sangles (27) et les rails, menant la flèche de grue (7), sont fixés sur la semelle inférieure horizontale, de sorte que la voie de transbordement horizontale (2) se trouve en dessous de la construction de support de la flèche de grue (7).

20. Installation de grue selon revendication 10, caractérisée par le fait que la flèche de grue (7) déplaçable est formée par deux poutres à boîte (26) résistant aux torsions, horizontalement reliées, étant intercalées (25) et que les rails (24), menant la flèche de grue (7), sont fixés sur les entretoises extérieures des poutres à boîte, de sorte que la voie de transbordement horizontale (2) se trouve en dessous de la construction se support de la flèche de grue (7).
